# EUROPEAN PATENT APPLICATION

(11) **EP 4 644 467 A1**
(43) Date of publication of application: **05.11.2025**
(21) Application number: 23911973.8
(22) Date of filing: 22.12.2023
(51) Int. Cl.: C08J 3/21, C08L 27/12

(54) **FLUORORESIN COMPOSITION, METHOD FOR PRODUCING FLUORORESIN COMPOSITION, AND METHOD FOR PRODUCING FLUORORESIN MOLDED BODY**

(30) Priority: 28.12.2022 JP 2022211453
(71) Applicant: AGC INC., Chiyoda-ku, Tokyo 1008405 (JP)
(72) Inventor: ORIOKA, Mariko, Tokyo 100-8405 (JP); EBATA, Shiro, Tokyo 100-8405 (JP)
(74) Representative: Müller-Boré & Partner Patentanwälte PartG mbB
(86) International application number: PCT/JP2023/046122
(87) International publication number: WO 2024/143193

(57) **Abstract**

To provide a method for producing a fluororesin composition with less coloring and excellent in mechanical strength, even by using a fluororesin powder with a heat history of being heated to the melting point or higher, and such a fluororesin composition.

A method for producing a fluororesin composition, which comprises mixing a mixture of a fluororesin powder with a heat history of being heated to the melting point or higher and a water-soluble organic solvent, with a fluororesin dispersion produced by emulsion polymerization, containing no nonionic surfactant.

## Description

### TECHNICAL FIELD

The present invention relates to a fluororesin composition, a method for producing the fluororesin composition, and a method for producing a fluororesin molded body.

### BACKGROUND ART

A polytetrafluoroethylene resin (molding powder) obtained by suspension polymerization of tetrafluoroethylene is compression-molded and fired to form a molded body. The molded body obtained by firing is processed e.g. by grinding into a molded product with a desired shape.

However, a once fired polytetrafluoroethylene resin, for example, plastic shavings generated at the time of processing, is rigid, does not consolidate into a single mass even when compressed after crushing, and thus cannot be molded. Therefore, it has been difficult to recycle such a resin.

Patent Document 1 discloses a method of mixing a fluororesin crushed after firing with a dispersion obtained by emulsion polymerization, concentrated and stabilized, and firing the obtained mixture to produce a new fluororesin molded body.

However, according to studies by the present inventors on the method disclosed in Patent Document 1, it was confirmed that the obtained fluororesin molded body is inferior both in the color and mechanical strength to a molded product produced without using the fluororesin crushed after firing.

Patent Document 2 discloses a method of mixing a powder of a fluororesin with a history of being heated to the melting point or higher, with an aqueous dispersion containing particles of a fluororesin and containing no hydrocarbon-based surfactant to obtain a fluororesin composition.

However, according to studies by the present inventors on the method disclosed in Patent Document 2, it was confirmed that the obtained fluororesin composition is inferior in mechanical strength to a molded product produced without using the fluororesin crushed after firing.

### PRIOR ART DOCUMENTS

### PATENT DOCUMENTS

Patent Document 1: WO2019/244433
Patent Document 2: JP-A-2022-159204

### DISCLOSURE OF INVENTION

### TECHNICAL PROBLEM

Under these circumstances, the object of the present invention is to provide a method for producing a fluororesin composition with less coloring and excellent in mechanical strength even by using a fluororesin powder with a heat history of being heated to the melting point or higher, and such a fluororesin composition. Another object of the present invention is to provide a fluororesin molded body having a color and mechanical strength (particularly tensile strength and tensile elongation) equal to those of a molded product produced without using a fluororesin powder with a heat history of being heated to the melting point or higher, even by using a fluororesin powder with a heat history of being heated to the melting point or higher. Still another object of the present invention is to provide a method for producing such a molded body.

### SOLUTION TO PROBLEM

To achieve the above objects, the present invention provides the following.
[1] A method for producing a fluororesin composition, which comprises mixing a mixture of a fluororesin powder with a heat history of being heated to the melting point or higher and a water-soluble organic solvent, with a fluororesin dispersion produced by emulsion polymerization, containing no nonionic surfactant.
[2] The method for producing a fluororesin composition according to [1], wherein in the mixture of the fluororesin powder with a heat history of being heated to the melting point or higher and the water-soluble organic solvent, the content of the fluororesin powder is 50 mass% or less to the total mass of the mixture.
[3] The method for producing a fluororesin composition according to [1] or [2], wherein the fluororesin of the fluororesin powder with a heat history of being heated to the melting point or higher, and the fluororesin in the fluororesin dispersion, are each independently at least one copolymer selected from the group consisting of polytetrafluoroethylene, an ethylene/tetrafluoroethylene copolymer, a tetrafluoroethylene/hexafluoropropylene copolymer, a tetrafluoroethylene/perfluoro(alkyl vinyl ether) copolymer, a tetrafluoroethylene/chlorotrifluoroethylene copolymer, an ethylene/tetrafluoroethylene/hexafluoropropylene copolymer, and a tetrafluoroethylene/hexafluoropropylene/vinylidene fluoride copolymer.
[4] The method for producing a fluororesin composition according to any one of [1] to [3], wherein the fluororesin of the fluororesin powder with a heat history of being heated to the melting point or higher, and the fluororesin in the fluororesin dispersion, are polytetrafluoroethylene.
[5] The method for producing a fluororesin composition according to any one of [1] to [4], wherein the water-soluble organic solvent is at least one member selected from the group consisting of an aprotic water-soluble organic solvent, an alcohol and an aminoalcohol.
[6] The method for producing a fluororesin composition according to any one of [1] to [5], wherein the water-soluble organic solvent is at least one member selected from the group consisting of methyl alcohol, ethyl alcohol, propyl alcohol, isopropyl alcohol, 1-methoxy-2-propanol, acetone, tetrahydrofuran, and acetonitrile.
[7] The method for producing a fluororesin composition according to any one of [1] to [6], wherein the water-soluble organic solvent is isopropyl alcohol.
[8] The method for producing a fluororesin composition according to any one of [1] to [7], wherein in the fluororesin composition, the content of the fluororesin is 10 mass% or more and 50 mass% or less to the total mass of the composition.
[9] A method for producing a fluororesin molded body, which comprises mixing a mixture of a fluororesin powder with a heat history of being heated to the melting point or higher and a water-soluble organic solvent, with a fluororesin dispersion produced by emulsion polymerization, containing no nonionic surfactant, to obtain a composition, preliminarily molding the composition, and firing the preliminarily molded composition.
[10] The method for producing a fluororesin molded body according to [9], wherein in the mixture of the fluororesin powder with a heat history of being heated to the melting point or higher and the water-soluble organic solvent, the content of the fluororesin powder is 50 mass% or less to the total mass of the mixture.
[11] The method for producing a fluororesin molded body according to [9] or [10], wherein the composition is washed before preliminarily molded.
[12] The method for producing a fluororesin molded body according to any one of [9] to [11], wherein the fluororesin of the fluororesin powder with a heat history of being heated to the melting point or higher, and the fluororesin in the fluororesin dispersion, are each independently at least one copolymer selected from the group consisting of polytetrafluoroethylene, an ethylene/tetrafluoroethylene copolymer, a tetrafluoroethylene/hexafluoropropylene copolymer, a tetrafluoroethylene/perfluoro(alkyl vinyl ether) copolymer, a tetrafluoroethylene/chlorotrifluoroethylene copolymer, an ethylene/tetrafluoroethylene/hexafluoropropylene copolymer, and a tetrafluoroethylene/hexafluoropropylene/vinylidene fluoride copolymer.
[13] The method for producing a fluororesin molded body according to any one of [9] to [12], wherein the fluororesin of the fluororesin powder with a heat history of being heated to the melting point or higher, and the fluororesin in the fluororesin dispersion, are polytetrafluoroethylene.
[14] The method for producing a fluororesin molded body according to any one of [9] to [13], wherein the water-soluble organic solvent is at least one member selected from the group consisting of an aprotic water-soluble organic solvent, an alcohol and an aminoalcohol.
[15] The method for producing a fluororesin molded body according to any one of [9] to [14], wherein the water-soluble organic solvent is at least one member selected from the group consisting of methyl alcohol, ethyl alcohol, propyl alcohol, isopropyl alcohol, 1-methoxy-2-propanol, acetone, tetrahydrofuran, and acetonitrile.
[16] The method for producing a fluororesin molded body according to any one of [9] to [15], wherein the water-soluble organic solvent is isopropyl alcohol.
[17] The method for producing a fluororesin molded body according to any one of [9] to [16], wherein in the fluororesin composition, the content of the fluororesin is 10 mass% or more and 50 mass% or less to the total mass of the composition.
[18] A fluororesin composition, which is obtained by the production method as defined in any one of [1] to [8].
[19] A fluororesin composition containing a fluororesin having a melting point of 335°C or lower, and a fluororesin dispersion produced by emulsion polymerization, wherein
   the fluororesin having a melting point of 335°C or lower is mixed at a concentration of 50 mass% or less with a water-soluble organic solvent, and
   the fluororesin dispersion contains no nonionic surfactant.

### ADVANTAGEOUS EFFECTS OF INVENTION

According to the methods for producing the fluororesin composition and the fluororesin molded body of the present invention, a fluororesin composition and a fluororesin molded body having a color and mechanical strength equal to those of a molded product produced without using a fluororesin powder with a heat history of being heated to the melting point or higher can be obtained, even by using a fluororesin powder with a heat history of being heated to the melting point or higher.

### DESCRIPTION OF EMBODIMENTS

Definitions of the following terms in this specification and scope of claims are as follows.

"Units based on a monomer" generically mean an atomic group directly formed by polymerization of one molecule of a monomer, and an atomic group obtained by chemical conversion of a part of the atomic group. In this specification, units based on a monomer may sometimes be referred to simply as monomer units.

A "monomer" means a compound having a polymerizable carbon-carbon double bond.

The "melting point" means a temperature corresponding to a maximum value of a melting peak measured by differential scanning calorimetry (DSC).

" to " used to indicate a numerical range is used to include values before and after it as the lower limit value and the upper limit value.

The "average particle size" means a value measured and calculated by a laser diffraction/scattering particle size distribution measuring apparatus (LA-920, manufactured by HORIBA, Ltd.).

### <Mixture>

The mixture is one obtained by mixing the fluororesin powder with a heat history of being heated to the melting point or higher, with a water-soluble organic solvent.

In the mixture, the content of the fluororesin powder to the total mass of the mixture is preferably 50 mass% or less. It is more preferably 45 mass% or less, further preferably 40 mass% or less.

The lower limit value is preferably 5 mass%, more preferably 10 mass%.

If the content of the fluororesin powder to the total mass of the mixture is higher than the upper limit value, the fluororesin powder forms clumps in the mixture, thus lowering miscibility. If the content of the fluororesin powder is less than the lower limit value, miscibility with the fluororesin dispersion tends to deteriorate.

### <Fluororesin powder>

The fluororesin powder used in the production method of the present invention has at least one heat history of being heated to the melting point or higher. It can be obtained by crushing shavings generated in processing of a molded body into a molded product with a desired shape and an unnecessary molded product. It corresponds to the fluororesin powder with a heat history of being heated to the melting point or higher. The crushing may be conducted e.g. by a crushing machine. Crude crushing, followed by fine crushing, may also be possible. The heating may be heating for molding, for heat treatment, or the like.

By means of such a heat history, the melting point of the fluororesin becomes lower than the melting point of a fluororesin that has no heat history.

The melting point of the fluororesin that has no heat history is preferably 360°C or lower, more preferably 355°C or lower, further preferably 350°C or lower.

The lower limit is not limited and is preferably 100°C or higher, more preferably 150°C or higher.

If the melting point of the fluororesin that has no heat history is out of the above range, mechanical strength of the molded product tends to reduce.

The melting point of the fluororesin with a heat history is preferably 335°C or lower, more preferably 330°C or lower.

The lower limit is not limited and is preferably 100°C or higher, more preferably 150°C or higher.

If the melting point of the fluororesin with a heat history is out of the above range, mechanical strength of the molded product tends to reduce.

The bulk density of the fluororesin powder is preferably 100 g/L or more, more preferably 105 g/L or more, further preferably 110 g/L or more. By the bulk density being equal to or higher than the lower limit value of the preferred range, the fluororesin powder is less likely to include air during molding and will be excellent in air removability, and powder particles will favorably be bonded. Further, the obtainable molded body is less likely to have remaining voids and tends to have improved uniformity.

The average particle size of the fluororesin powder is preferably 1 to 250 µm, more preferably 5 to 200 µm, particularly preferably 5 to 100 µm.

When the average particle size of the fluororesin powder is within the above range, the resulting molded body will have improved uniformity.

The average particle size of the fluororesin may be measured by using a laser diffraction/scattering particle size distribution measuring apparatus (LA-920, manufactured by HORIBA, Ltd.).

The fluororesin to be used for the fluororesin powder may, for example, be polytetrafluoroethylene (PTFE), an ethylene/tetrafluoroethylene copolymer (ETFE), a tetrafluoroethylene/hexafluoropropylene copolymer (FEP), a tetrafluoroethylene/perfluoro(alkyl vinyl ether) copolymer (PFA), a tetrafluoroethylene/chlorotrifluoroethylene copolymer , an ethylene/tetrafluoroethylene/hexafluoropropylene copolymer (EFEP) and a tetrafluoroethylene/hexafluoropropylene/vinylidene fluoride copolymer.

The fluororesin to be used for the fluororesin powder is particularly preferably PTFE. PTFE is a polymer containing units based on tetrafluoroethylene as a monomer (hereinafter sometimes referred to as "TFE units") in a content of 99 mass% or more. With a view to suitably applying the production method of the present invention, PTFE preferably contains the TFE units in a content of 99.5 mass% or more, and the content of the TFE units may be 100 mass%.

Monomer units other than the TFE units may, for example, be monomer units based on a perfluoro(alkyl vinyl ether) (PFAVE), perfluoro(2,2-dimethyl-1,3-dioxole), perfluoro(4-methoxy-1,3-dioxole), chlorotrifluoroethylene or a perfluoroalkylethylene. The monomer units other than the TFE units may be used alone or in combination of two or more. By the fluororesin containing the monomer units other than the TFE units, crystallization of PTFE is suppressed to a certain extent, and tensile strength, tensile elongation, breakdown resistance, creep resistance and the like improve.

PTFE used for the fluororesin powder is particularly preferably PTFE (called a molding powder) obtained by suspension polymerization.

PTFE (molding powder) obtained by suspension polymerization has a very high melt viscosity and shows non-melt moldability so that it can not be molded with a conventional method of molding a thermoplastic resin such as extrusion or injection molding. Thus, in a case where PTFE (molding powder) obtained by suspension polymerization is molded, e.g. a method may be employed in which PTFE is filled in a mold and compression-molded, and sintered by heating.

Specifically, first, the molding powder is filled in a mold at room temperature and compression-molded, and heated to the melting point of the **PTFE** or higher so as to be sintered to obtain a molded body. The molding powder may be granulated and used as granules as the case requires. At the time of granulation, an inorganic filler or other optional components may be blended.

Then, the molded body is subjected to mechanical processing such as grinding so as to be formed into a molded product with a desired shape. As the molded product, industrial members such as gaskets, linings and insulating films, and containers to be subjected to strong acids or strong alkalis in semiconductor industries, may, for example, be mentioned.

### [Optional component]

The powder material used in the production method of the present invention may contain an inorganic filler. Even when an inorganic filler is contained, a molded product can be obtained by the production method of the present invention.

The inorganic filler may, for example, be a reinforced fiber such as a glass fiber or a carbon fiber, or a powdery inorganic filler of e.g. bronze or graphite.

The content of the inorganic filler to the total mass of the powder material is preferably 0 to 70 mass%, more preferably 0 to 65 mass%, further preferably 0 to 60 mass%.

### <Water-soluble organic solvent>

The water-soluble organic solvent is, in view of miscibility with a fluororesin and water, preferably at least one member selected from the group consisting of an aprotic water-soluble organic solvent, an alcohol and an aminoalcohol. **It** is more preferably at least one member selected from the group consisting of methyl alcohol, ethyl alcohol, propyl alcohol, isopropyl alcohol, 1-methoxy-2-propanol, acetone, tetrahydrofuran and acetonitrile, more preferably isopropyl alcohol. The water-soluble organic solvent may be used alone or in combination of two or more.

### <Fluororesin dispersion>

The fluororesin dispersion is an aqueous emulsion containing fluororesin particles obtained by emulsion polymerization method using a dispersion medium and an emulsifier. Heretofore, the method includes a step of blending a nonionic surfactant to the obtained aqueous emulsion to obtain a fluororesin dispersion having improved storage stability. In the present invention, the fluororesin dispersion preferably contains no nonionic surfactant with a view to suppressing coloring, and the fluororesin dispersion refers to one that is completed at the step of preparing the aqueous emulsion.

The fluororesin used for the fluororesin dispersion may, for example, be polytetrafluoroethylene (PTFE), an ethylene/tetrafluoroethylene copolymer (ETFE), a tetrafluoroethylene/hexafluoropropylene copolymer (FEP), a tetrafluoroethylene/perfluoro(alkyl vinyl ether) copolymer (PFA), a tetrafluoroethylene/chlorotrifluoroethylene copolymer, an ethylene/tetrafluoroethylene/hexafluoropropylene copolymer (EFEP), or a tetrafluoroethylene/hexafluoropropylene/vinylidene fluoride copolymer.

The fluororesin used for the fluororesin dispersion is particularly preferably PTFE. PTFE is a polymer containing units based on tetrafluoroethylene as a monomer (hereinafter sometimes referred to as "TFE units") in a content of 99.0 mass% or more. With a view to suitably applying the production method of the present invention, PTFE preferably contains the TFE units in a content of 99.5 mass% or more, and the content of the TFE units may be 100 mass%.

Monomer units other than the TFE units may, for example be monomer units based on a perfluoro(alkyl vinyl ether) (PFAVE), perfluoro(2,2-dimethyl-1,3-dioxole), perfluoro(4-methoxy-1,3-dioxole), chlorotrifluoroethylene or a perfluoroalkylethylene. The monomer units other than the TFE units may be contained alone or in combination of two or more. By the fluororesin containing monomer units other than the TFE units, crystallization of PTFE is suppressed to a certain extent, and tensile strength, tensile elongation, breakdown resistance, creep resistance and the like improve.

PTFE used for the fluororesin dispersion is particularly preferably PTFE obtained by emulsion polymerization method.

The emulsion polymerization method for PTFE is a polymerization method of homopolymerizing a TFE monomer or copolymerizing a TFE monomer with another monomer in an aqueous medium to obtain a polymer emulsion. Conventionally, it is conducted by homopolymerizing a TFE monomer or copolymerizing a TFE monomer with another monomer while a mixture of water, a polymerization initiator, a surfactant and the like is stirred.

In the emulsion polymerization method for PTFE, in the presence of an aqueous medium, a polymerization initiator, an anionic fluorinated emulsifier, and a stabilizing aid such as paraffin wax, preferably under an elevated pressure of 0.5 to 3.0 MPa, the TFE monomer is emulsion-polymerized preferably over a period of 1 to 20 hours.

As the anionic fluorinated emulsifier, a fluorinated emulsifier of the formula (1) may be mentioned.

Formula (1): XCF₂CF₂(O)ₘCF₂CF₂OCF₂COOA

wherein X is a hydrogen atom or a fluorine atom, A is a hydrogen atom, an alkali metal or NH₄, and m is an integer of 0 to 1.

The fluorinated emulsifier of the formula (1) has a favorable effect of stabilizing polymerization for PTFE fine particles and can suitably be used.

X is a hydrogen atom or a fluorine atom and is preferably a fluorine atom in view of polymerization stability. Further, the value of m is preferably 1, whereby favorable polymerization stability and mechanical stability of an aqueous PTFE dispersion will be achieved.

Specific examples of A include H, Li, Na, K and NH₄, and particularly preferred is NH₄, whereby the fluorinated emulsifier of the formula (1) will favorably be dissolved in water, and metal ion components will not remain as an impurity in PTFE products.

Particularly preferred examples of the fluorinated emulsifier of the formula (1) include CF₃CF₂CF₂CF₂OCF₂COONH₄ and C₂F₅OCF₂CF₂OCF₂COONH₄ (hereinafter referred to as EEA) and EEA is more preferred.

The fluorinated emulsifier of the formula (1) may be obtained in such a manner that an ester of a corresponding non-fluorinated carboxylic acid or partially fluorinated carboxylic acid is fluorinated by a known fluorination method such as a liquid phase fluorination method of reaction with fluorine in a liquid phase, a fluorination method using cobalt fluoride, or an electrochemical fluorination method, the ester bond of the obtained fluorinated ester is hydrolyzed, followed by purification and by neutralization with ammonia.

The amount of the anionic fluorinated emulsifier used in the step of emulsion-polymerizing the TFE monomer, is preferably 0.15 to 2.0 mass% to the mass of PTFE to be formed, more preferably 0.2 to 1.0 mass%, particularly preferably 0.2 to 0.5 mass%.

The stabilizing aid is preferably paraffin wax, a fluorinated oil, a fluorinated solvent or a silicone oil. The stabilizing aid may be used alone or in combination of two or more. The stabilizing aid is more preferably paraffin wax. The paraffin wax may be liquid, semi-solid or solid at room temperature, but is preferably a saturated hydrocarbon having 12 or more carbon atoms. The melting point of the paraffin wax is usually preferably 40 to 65°C, more preferably 50 to 65°C. The amount of the stabilizing aid used is preferably 0.1 to 12 mass% based on the mass of water used, more preferably 0.1 to 8 mass%.

The polymerization initiator is preferably a water-soluble radical initiator, a water-soluble redox initiator or the like. The water-soluble radical initiator is preferably a persulfate such as ammonium persulfate or potassium persulfate, or a water-soluble organic peroxide such as disuccinic peroxide, bisglutaric peroxide or tert-butyl hydroperoxide. The polymerization initiator may be used alone or in combination of two or more. An oil-soluble initiator may also be used. The polymerization initiator is more preferably disuccinic peroxide.

The amount of the polymerization initiator used is usually preferably 0.01 to 0.20 mass% to the final yield of PTFE, more preferably 0.01 to 0.15 mass%.

The concentration of the fluororesin contained in the fluororesin dispersion of the present invention is preferably 15 to 40 mass%, more preferably 17 to 35 mass%, particularly preferably 20 to 30 mass%.

The average particle size of primary particles of the fluororesin contained in the fluororesin dispersion of the present invention is 0.05 to 0.50 µm, more preferably 0.08 to 0.45 µm, particularly preferably 0.10 to 0.35 µm.

When the average particle size of the fluororesin contained in the fluororesin dispersion is within the above range, excellent emulsion stability will be achieved.

The standard specific gravity (hereinafter sometimes referred to as SSG) of the PTFE resin contained in the fluororesin dispersion of the present invention is an index of the average molecular weight of PTFE, and a PTFE with SSG of 2.14 or more and less than 2.22 may be conceptually classified to a high molecular weight PTFE, and a PTFE with SSG of 2.22 to 2.4 to a low molecular weight PTFE. Since physical properties of a low molecular weight PTFE tend to reduce, SSG is preferably 2.14 or more and less than 2.22, particularly preferably 2.14 to 2.21.

The fluororesin dispersion of the present invention preferably contains no nonionic surfactant, with a view to suppressing coloring of the obtainable molded body. "Containing no nonionic surfactant" means that the amount of the nonionic surfactant to the fluororesin in the fluororesin dispersion is preferably 2.0 mass% or less, more preferably 1.0 mass% or less, further preferably 0.1 mass% or less.

The nonionic surfactant may be one represented by the formula (2) and/or the formula (3).

Formula (2): R¹-O-B-H

wherein R' is a C₈₋₁₈ alkyl group, O is an oxygen atom, and B is a polyoxyalkylene chain comprising 5 to 20 oxyethylene groups and 1 to 2 oxypropylene groups.

Formula (3): R²-O-C-Y

wherein R² is a C₆₋₁₈ alkyl group, O is an oxygen atom, C is a polyoxyalkylene chain comprising 1 to 3 oxybutylene groups and 5 to 20 oxyethylene groups, and Y is a hydrogen atom or a methyl group.

In the nonionic surfactant represented by the formula (2), the number of carbon atoms in the alkyl group represented by R¹ is preferably 8 to 18, more preferably 10 to 16. If the alkyl group is short, an aqueous fluororesin dispersion composition tends to have a high surface tension and lowered wettability, and on the contrary, if the alkyl group is too long, the aqueous fluororesin dispersion tends to have impaired storage stability when left to stand. The alkyl group, which is a hydrophobic group, preferably has a branched structure, whereby a favorable aqueous dispersion composition with better wettability will be obtained. The alkyl group having a branched structure is preferably an alkyl group having a branch within a range of from the base carbon atom to the fifth carbon atom of the alkyl group, particularly preferably an alkyl group having a branch within a range of from the base carbon atom to the third carbon atom of the alkyl group. The carbon atom at the branch point may be a secondary carbon atom or a tertiary carbon atom, and is preferably a secondary carbon atom.

Specific examples of a preferred alkyl group having a branched structure include C₁₀H₂₁CH(CH₃)CH₂-, C₉H₁₉CH(C₃H₇)-, and C₆H₁₃CH(C₆H₁₃)-.

In the formula (2), B, which is hydrophilic group, is a polyoxyalkylene chain comprising 5 to 20 oxyethylene groups and 1 to 2 oxypropylene groups, and is preferably a polyoxyalkylene chain comprising 7 to 12 oxyethylene groups and 1 to 2 oxypropylene groups, in view of favorable properties of the aqueous fluororesin dispersion composition.

If B contains no oxypropylene group, anti-foaming property tends to reduce. If B contains 3 or more oxypropylene groups, the surface tension tends to increase and wettability tends to reduce, and repelling at the time of recoating may occur.

In B, the oxypropylene group may be present in the polyoxyethylene chain, or may be bonded to the terminal end of the polyoxyethylene chain. The oxypropylene group is bonded preferably to the terminal end of the polyoxyethylene chain, whereby excellent anti-foaming property will be achieved, and the oxypropylene group is particularly preferably bonded to each of positions adjacent to both terminal ends of the polyoxyethylene chain, whereby more excellent anti-foaming property will be achieved.

The average number of oxyethylene groups in one molecule is preferably 5 to 20, more preferably 7 to 12. If the number is too small, the aqueous fluororesin dispersion composition tends to be inferior in storage stability, and if the number is too large, the composition tends to have lowered wettability.

As the nonionic surfactant used in the present invention, for example, a commercially available nonionic surfactant having an average molecular structure, such as C₁₃H₂₇O(C₂H₄O)₈C₃H₆OH, C₁₃H₂₇O(C₂H₄O)₉C₃H₆OH, C₁₃H₂₇O(C₂H₄O)₁₉(C₃H₆O)₂H, C₁₆H₂₇O(C₂H₄O)₁₂(C₃H₆O)₂H, may be mentioned.

Regarding he numbers of the oxyethylene groups and the oxypropylene groups in the oxyalkylene groups in the nonionic surfactant represented by the formula (2), the molecular structure of the nonionic surfactant is an average value of a mixture of several substances having a certain distribution. Also in a case where two or more types of the nonionic surfactant represented by the formula (2) are used as mixed, favorable results will be obtained when the average number of oxyalkylene groups in the respective nonionic surfactants is within the above range. Each value is not limited to an integer.

The content of the nonionic surfactant of the formula (2) is 2 to 12 mass% to the fluororesin, and is particularly preferably 4 to 12 mass%. If the content is lower than this range, storage stability tends to reduce. When the content is high, the resulting composition is suitable for application to thick coating, however, if the content is higher than 12 mass%, no further improvement in performance will be confirmed, and from economical reason, the content is preferably 12 mass% or less.

In the nonionic surfactant represented by the formula (3), the number of carbon atoms in the alkyl group represented by R² is preferably 6 to 18, more preferably 8 to 16, further preferably 10 to 14. If the number of carbon atoms in the alkyl group is less than the lower limit value, the aqueous fluororesin dispersion tends to have a high surface tension and lowered wettability, and on the contrary, if the number of carbon atoms in the alkyl group is more than the upper limit value, the aqueous fluororesin dispersion tends to have impaired storage stability when left to sand. When the number of carbon atoms in the alkyl group is within this range, favorable wettability and favorable storage stability will be achieved.

The alkyl group represented by R² preferably has a branched structure, whereby a suitable aqueous dispersion with more favorable wettability will be obtained. The carbon atom at the branch point may be a secondary carbon atom or a tertiary carbon atom, and is preferably a secondary carbon atom. Specific examples of a preferred alkyl group having a branched structure include C₁₉H₂₁CH(CH₃)CH₂-, C₉H₁₉CH(C₃H₇)-, C₆H₁₃CH(C₆H₁₃)-, and CH(CH₃)₂CH₂CH(CH₃)₂CH₂CH(CH(CH₃)₂CH₂-.

The alkyl group represented by R² may be one having 10% or less of hydrogen atoms in the alkyl group replaced with a halogen atom such as fluorine, chlorine or bromine. The alkyl group may have 1 to 2 unsaturated bonds.

C in the formula (3) is a polyoxyalkylene chain comprising 1 to 3 oxybutylene groups and 5 to 20 oxyethylene groups. The number of oxybutylene groups is preferably 1 to 2.5, particularly preferably 1 to 2. If the number is larger than this range, the aqueous fluororesin dispersion tends to have an increased viscosity or reduced stability, and if the number is smaller than this range, the aqueous fluororesin dispersion composition tends to be inferior in anti-foaming property, wettability and viscosity properties. Within this range, favorable properties such as viscosity, stability, anti-foaming property and wettability will be achieved.

The oxybutylene group may be branched or may be linear, and is preferably branched.

Specific examples of the oxybutylene group include -CH₂-CH(C₂H₅)-O-, - CH(C₂H₅)CH₂-O-, -CH(CH₃)-CH(CH₃)-O-, -CH₂CH₂-CH(CH₃)-O-, and -CH₂CH₂CH₂CH₂-O-, and preferred are -CH₂-CH(C₂H₅)-O-, -CH(C₂H₅)CH₂-O-, and -CH₂CH₂-CH(CH₃)-O-. As a material of the oxybutylene group, various butylene oxides may be mentioned and specific examples include 1,2-butylene oxide, 2,3-butylene oxide, tetrahydrofuran and methyl oxetane.

The number of oxyethylene groups in the polyoxyalkylene chain is 5 to 20, preferably 6 to 15, particularly preferably 7 to 13. If this number is too small, the aqueous fluororesin dispersion tends to be inferior in storage stability, and if the number is too large, wettability tends to reduce. Within this range, favorable properties such as viscosity, stability, anti-foaming property and wettability will be achieved.

The oxybutylene groups in the polyoxyalkylene chain may have a block structure or a random structure.

The oxybutylene groups may be present at any moiety in the polyoxyalkylene chain, but are preferably present up to 70% of the total length of the polyoxyalkylene chain from the R²-O- group side, more preferably up to 50% of the total length of the polyoxyalkylene chain from the R²-O- group side.

The moiety of the polyoxyalkylene chain bonded to the R²-O- group is preferably the oxybutylene group, more preferably a polyoxybutylene chain comprising 1 to 2 oxybutylene groups. The moiety of the polyoxyalkylene chain bonded to the Y group is preferably the oxyethylene group, more preferably a polyoxyethylene chain comprising 5 to 20 oxyethylene groups.

The polyoxyalkylene chain having such a preferred structure tends to have more favorable properties such as viscosity, stability, anti-foaming property and wettability.

Y in the formula (3) is a hydrogen atom or a methyl group and is preferably a hydrogen atom.

The nonionic surfactant of the formula (3) may be obtained by subjecting butylene oxide and ethylene oxide to addition reaction with a higher alcohol in accordance with a known method. Butylene oxide and ethylene oxide may be reacted simultaneously as mixed, or butylene oxide may be reacted first and then ethylene oxide is reacted, or ethylene oxide may be reacted first and butylene oxide is reacted, however, it is preferred that butylene oxide is reacted first and then ethylene oxide is reacted.

Specific examples of the nonionic surfactant of the formula (3) include C₁₃H₂₇OCH₂CH(C₂H₅)O(C₂H₄O)₈H, C₁₀H₂₁CH(CH₃)CH₂OCH₂CH(C₂H₅)O(C₂H₄O)₈H, C₁₀H₂₁CH(CH₃)CH₂OCH(C₂H₅)CH₂O(C₂H₄O)₈H, C₁₂H₂₅OCH₂CH(C₂H₅)O(C₂H₄O)₈H, C₈H₁₇OCH₂CH(C₂H₅)O(C₂H₄O)₁₀H, C₁₂H₂₅OCH₂CH(C₂H₅)O(C₂H₄O)₁₀H, C₁₃H₂₇OCH₂CH(C₂H₅)O(C₂H₄O)₁₁H, C₁₃H₂₇OCH₂CH₂OCH₂CH(C₂H₅)O(C₂H₄O)₈H, C₁₂H₂₅O(CH₂CH(C₂H₅)O)₂(C₂H₄O)₈H, C₁₀H₂₁CH(CH₃)CH₂O(C₂H₄O)₉CH₂CH(C₂H₅)OH, C₁₆H₃₃OC₂H₄OCH(C₂H₅)CH₂O(C₂H₄O)₉H, C₁₂H₂₅OCH₂CH(C₂H₅)O(C₂H₄O)₈CH₂CH(C₂H₅)OH, C₁₃H₂₇OCH(CH₃)CH(CH₃)O(C₂H₄O)₃H, C₁₉H₂₁CH(CH₃)CH₂OCH(CH₃)CH(CH₃)O(C₂H₄O)₃H, C₁₉H₂₁CH(CH₃)CH₂OCH(CH₃)CH(CH₃)O(C₂H₄O)₃H, C₁₂H₂₅OCH(CH₃)CH(CH₃)O(C₂H₄O)₈H, C₃H₁₇OCH(CH₃)CH(CH₃)O(C₂H₄O)₁₀H, C₁₂H₂₅OCH(CH₃)CH(CH₃)O(C₂H₄O)₁₀H, C₁₃H₂₇OCH(CH₃)CH(CH₃)O(C₂H₄O)₁₁H, C₁₃H₂₇O(CH₂)₄O(C₂H₄O)₃H, C₁₂H₂₅O(CH₂)₄O(C₂H₄O)₈H, C₃H₁₇O(CH₂)₄O(C₂H₄O)₁₀H, C₁₂H₂₅O(CH₂)₄O(C₂H₄O)₁₀H, C₁₃H₂₇O(CH₂)₄O(C₂H₄O)₁₁H, C₁₃H₂₇O(CH₂)₂CH(CH₃)O(C₂H₄O)₃H, C₁₂H₂₅O(CH₂)₂CH(CH₃)O(C₂H₄O)₈H, C₈H₁₇OO(CH₂)₂CH(CH₃)O(C₂H₄O)₁₀H, C₁₂H₂₅O(CH₂)₂CH(CH₃)O(C₂H₄O)₁₀H, and C₁₃H₂₇O(CH₂)₂CH(CH₃)O(C₂H₄O)₁₁H.

Usually, the nonionic surfactant is a mixture of a several types of molecules differing in the chain length distribution and isomers, and the chain length in the formula (3) represents the average chain length of the several types of molecules. In a case where several types of the nonionic surfactant represented by the formula (3) are used as mixed also, favorable results will be obtained when the average number of oxyalkylene groups in the respective nonionic surfactants is within the above range. Each value is not limited to an integer.

The content of the nonionic surfactant of the formula (3) is 0.1 to 12.0 mass% to the fluororesin, preferably 0.5 to 11.0 mass%, particularly preferably 1.0 to 10.0 mass%. If the content is lower than 1.0 mass%, storage stability tends to reduce, and the resulting fluororesin coating film tends to have cracks and tends to repel. When the content is high, the resulting composition is particularly suitable for application to thick coating, however, if the content is higher than 12.0 mass%, the resulting fluororesin coating film tends to have fine cracks.

As the nonionic surfactant contained in the fluororesin dispersion, the nonionic surfactant represented by the formula (2) or the formula (3) may be used alone, or the nonionic surfactants represented by the formula (2) and the formula (3) may be used in combination.

In a case where the nonionic surfactants represented by the formula (2) and the formula (3) are used in combination, as the average value of the entire nonionic surfactant, the number of oxybutylene groups per molecule of the nonionic surfactant is preferably 0.5 to 2, more preferably 0.7 to 1.7, particularly preferably 0.9 to 1.5.

The nonionic surfactants represented by the formula (2) and the formula (3) may be added separately, or the nonionic surfactant represented by the formula (2) may be a by-product generated in preparation of the nonionic surfactant represented by the formula (3).

The aqueous fluororesin dispersion contains water as a dispersion medium for fluororesin fine particles, and this water may be water contained in the fluororesin polymer emulsion, or may be water prepared separately from the water in the fluororesin polymer emulsion.

The aqueous fluororesin dispersion may properly contain a very small amount of at least one member selected from a pH adjusting agent such as ammonia, an anionic surfactant, a polyethylene oxide-based thickener, a polyurethane-based thickener, a thixotropy-imparting agent, a silicone-based wettability improving agent, a fluorinated wettability improving agent and a preservative, as the case requires. Further, it may contain at least one member selected from a water-soluble organic solvent, an organic solvent such as toluene and xylene, a pigment such as titanium oxide, iron oxide, carbon black and cobalt blue, a glass powder, hollow glass beads, graphite fine particles, silica fine particles, and a coloring agent such as mica and titanium oxide-coated mica powder.

### <Fluororesin composition>

The fluororesin composition of the present invention is obtained by mixing a mixture of the fluororesin powder with a heat history of being heated to the melting point or higher and the water-soluble organic solvent, with the fluororesin dispersion produced by emulsion polymerization, containing no nonionic surfactant.

Specifically, into the fluororesin dispersion containing no nonionic surfactant with stirring, the mixture of the water-soluble organic solvent and the fluororesin powder with a heat history of being heated to the melting point or higher is added and stirred, to obtain the fluororesin composition of the present invention.

In the fluororesin composition of the present invention, the total content of the fluororesin of the fluororesin powder with a heat history of being heated to the melting point or higher and the fluororesin in the fluororesin dispersion, to the total mass of the composition, is 10 mass% or more and 50 mass% or less, preferably 12 mass% or more and 45 mass% or less, particularly preferably 15 mass% or more and 35 mass% or less. When the fluororesin content in the fluororesin composition is equal to or more than the lower limit value, the fluororesin is likely to coagulate. When the fluororesin content in the fluororesin composition is equal to or less than the upper limit value, excellent miscibility will be achieved.

### <Molded body>

The fluororesin molded body of the present invention is obtained by mixing a mixture of the fluororesin powder with a heat history of being heated to the melting point or higher and the water-soluble organic solvent, with the fluororesin dispersion produced by emulsion polymerization, containing no nonionic surfactant, to obtain a composition, preliminary molding the composition, and firing the preliminarily molded product.

Specifically, into the fluororesin dispersion containing no nonionic surfactant with stirring, the mixture of the water-soluble organic solvent and the fluororesin powder with a heat history of being heated to the melting point or higher is added and stirred for agglomeration to obtain an agglomerate. The agglomerate is subjected to filtration to separate flocs from the solvent, followed by drying to obtain a powder mixture of the fluororesin powder with a heat history of being heated to the melting point or higher, and the fluororesin dispersion produced by emulsion polymerization, containing no nonionic surfactant. The powder mixture of the fluororesin powder and the fluororesin dispersion is put in a mold and pressurized to be preliminarily molded and then fired to obtain a molded body.

For the mixture of the fluororesin powder with a heat history of being heated to the melting point or higher and the water-soluble organic solvent, used to obtain the fluororesin molded body of the present invention, the above-described fluororesin powder and water-soluble organic solvent are suitably used.

In the mixture, the content of the fluororesin powder to the total mass of the mixture is preferably 50 mass% or less. It is more preferably 45 mass% or less, further preferably 40 mass% or less.

The lower limit value is preferably 5 mass%, more preferably 10 mass%.

If the content of the fluororesin powder to the total mass of the mixture is higher than the upper limit value, the fluororesin powder tends to form clumps in the mixture, thus lowering miscibility. If the content of the fluororesin powder is less than the lower limit value, miscibility with the fluororesin dispersion tends to deteriorate.

As the fluororesin dispersion produced by emulsion polymerization, containing no nonionic surfactant, used to obtain the fluororesin molded body of the present invention, the above described fluororesin dispersion is suitably used.

In the fluororesin molded body of the present invention, the total content of the fluororesin of the fluororesin powder with a heat history of being heated to the melting point or higher and the fluororesin in the fluororesin dispersion, used to obtain the fluororesin molded body, is, to the total mass of the composition, 10 mass% or more and 50 mass% or less, preferably 12 mass% or more and 45 mass% or less, particularly preferably 15 mass% or more and 35 mass% or less. When the fluororesin content in the fluororesin composition is equal to or more than the lower limit value, the fluororesin is likely to agglomerate. When the fluororesin content in the fluororesin composition is equal to or less than the upper limit value, excellent miscibility will be achieved.

It is preferred to wash the fluororesin composition before preliminarily molded to remove the water-soluble organic solvent. The solvent for washing is preferably water or an aqueous solution. The aqueous solution is adjusted to have a pH at which the water-soluble organic solvent can be removed.

Specifically, into the fluororesin dispersion containing no nonionic surfactant with stirring, the mixture of the water-soluble organic solvent and the fluororesin powder with a heat history of being heated to the melting point or higher is added and stirred for agglomeration to obtain an agglomerate. The agglomerate is subjected to filtration to separate flocs from the solvent, and the flocs are washed with a large quantity of water. Then, the flocs are dried to obtain a powder mixture of the fluororesin powder with a heat history of being heated to the melting point or higher, and the fluororesin dispersion produced by emulsion polymerization, containing no nonionic surfactant. The powder mixture of the fluororesin powder and the fluororesin dispersion is put in a mold and pressurized to be preliminarily molded and then fired to obtain a molded body.

Drying after separation of the flocs from the solvent may be vacuum drying or ordinary pressure drying. The flocs are dried preferably at a temperature equal to or lower than the melting point of the fluororesin for 6 hours or more.

The pressure when the powder mixture is preliminarily molded is preferably 100 to 350 Kg/cm³.

Firing after the preliminary molding is conducted preferably at a temperature of 360 to 380°C.

The amount of the nonionic surfactant contained in the fluororesin molded body of the present invention is relatively calculated from the peak area measured by Headspace GC-MS by Agilent Technologies. The peak area is preferably less than 1000, more preferably less than 200. When the peak area is less than 200, the molded body is less likely to be colored and tends to have high tensile strength and tensile elongation.

The amount of the water-soluble organic solvent contained in the fluororesin molded body of the present invention is relatively calculated from the peak area measured by Headspace GC-MS by Agilent Technologies. The peak area is preferably less than 150000, more preferably less than 120000. When the peak area is less than 120000, the molded product is less likely to be colored and tends to have high tensile strength and tensile elongation.

The whiteness of the fluororesin molded body of the present invention is preferably 40 or higher, more preferably 45 or higher, further preferably 50 or higher.

When the whiteness is 50 or higher, the molded body is less likely to be colored and tends to have more excellent appearance.

The tensile strength of the fluororesin molded body of the present invention is preferably 10 MPa or more, more preferably 13 MPa or more, further preferably 16 MPa or more. The upper limit is not particularly limited and may, for example, be 40 MPa.

The tensile strength is measured in accordance with ASTM D-1708.

The tensile elongation of the fluororesin molded body of the present invention is preferably 150% or more, more preferably 180% or more, further preferably 200% or more. The upper limit is not particularly limited and may, for example, be 500%.

The tensile elongation is measured in accordance with ASTM D-1708.

The reason as to why the fluororesin molded body of the present invention has properties equal to those of a molded body prepared from the molding powder without a heat history, is not clearly understood, however, the first reason is considered to be because the fluororesin dispersion contains no nonionic surfactant. The mechanism is estimated as follows. If the nonionic surfactant remains in the fluororesin dispersion, although part of the nonionic surfactant is thermally decomposed at the time of firing, the other part is not completely removed as a gas and remains as carbonized, thus leading to coloring and reduction in the tensile strength and the tensile elongation. In the present invention, since no nonionic surfactant is contained in the fluororesin dispersion, residue derived from the surfactant is less, and improvement in the color and in the tensile strength and the tensile elongation is achieved. By mixing the fluororesin powder with a heat history as mixed with and dispersed in the water-soluble organic solvent, with the fluororesin dispersion, the fluororesin powder with a heat history and the fluororesin in the fluororesin dispersion are uniformly mixed, whereby the properties of the obtained fluororesin molded body are improved. Further, by agglomerating the fluororesin composition, conducting filtration and washing the flocs with water, residue derived from the water-soluble organic solvent mixed with the fluororesin powder is reduced, whereby further improvement in the color and in the tensile strength and the tensile elongation is achieved.

The obtained fluororesin molded body is processed e.g. by grinding into a molded product with a desired shape. Examples of the application of the molded product include seals, packings, rollers, sockets and coupling joints.

### EXAMPLES

Now, the present invention will be described with reference to Examples. It should be understood that the present invention is by no means restricted to such Examples. Tests and evaluations in Examples and Comparative Examples were conducted as follows.

### <Measurement method>

### [Melting point]

Measured from an endothermic peak when heated in air atmosphere to 300°C at a rate of 10°C/min by a scanning differential calorimeter (manufactured by Seiko Instruments Inc., DSC7200). In a case where there were more than one endothermic peak, the peak temperature of the highest endothermic peak was taken.

### [Average particle size]

Calculated from particle size distribution on the number basis, with respect to the powder dispersed in water, measured by a laser diffraction/scattering particle size distribution measuring apparatus (LA-920) manufactured by HORIBA, Ltd.

### [Loose bulk density]

The loose bulk density of the fluororesin powder was measured by the method described in WO2016/017801, paragraphs [0117] and [0118].

Standard specific gravity (SSG): measured in accordance with ASTM D1457-91a, D4895-91a.

Average molecular weight: measured from the latent heat quantity obtained by subjecting dried PTFE to differential thermal analysis in accordance with the method of Suwa (J. Appl. Polym. Sci, 17, 3253 (1973)).

### [Measurement of residue of nonionic surfactant and water-soluble organic solvent]

Residues of the nonionic surfactant and the water-soluble organic solvent were measured by using the dried powder mixture before preliminary molding.

By means of Headspace gas chromatography/mass spectrometry (GC-MS) by Agilent Technologies, the peak area of each component was calculated. As the water-soluble organic solvent, the residue of isopropanol was confirmed. The peak of the nonionic surfactant was detected at a retention time of 22.21 minutes, and the peak of isopropanol was detected at a retention time of 6.25 minutes.

Headspace conditions:
Heating temperature: 240°C
Heating time: 30 minutes
Amount injected: 1 mL
Transfer line temperature: 255°C

GC conditions:
Column: length 60 m, inner diameter 0.25 mm, thickness 1 µm
Inlet temperature: 250°C
Oven temperature: 40°C (10 min)-(10°C/min)-280°C (5 min), 39 minutes in total
Split ratio: 50

MS conditions:
Ion source temperature: 230°C
Ionization method: EI (Electron lonization)

**Residues** of the respective components were judged based on the following index.
Index of residue derived from nonionic surfactant
   +: peak area less than 200
   ++: peak area 200 or more and less than 10000
   +++: peak area 10000 or more
Index of residue derived from isopropanol
   +: peak area less than 120000
   ++: peak area 120000 or more

The whiteness, the tensile strength and the tensile elongation were evaluated with respect to a sheet-shaped molded product with a thickness of 0.5 mm obtained by skiving the fluororesin molded body.

### [Whiteness (WI)]

Measured by a whiteness meter (spectrophotometric type color difference meter (SE7700)) manufactured by NIPPON DENSHOKU INDUSTRIES CO, LTD.

The whiteness was judged based on the following index.
O: WI 50 or more
△: WI 25 or more and less than 50
× : WI 25 or less

### [Tensile strength and tensile elongation]

In accordance with ASTM D-1708, a test specimen was cut out in a micro-dumbbell shape, and tensile test was conducted using AUTOCOM universal testing machine Instron tensile testing machine (AC-1KN-CM) manufactured by T.S.E. Co., Ltd. at 23°C with a distance between chucks of 35 mm at a tensile rate of 50 mm/min with respect to one point.

TD means the compression direction at the time of preliminary molding, and MD means a perpendicular direction thereto.

### <Example 1>

Preparation of fluororesin powder with heat history of being heated to melting point or higher

Edge parts and scraps of a preliminarily molded and fired molded body, formed of a powder material (molding powder) composed of a non-fired PTFE homopolymer obtained by suspension polymerization, were crushed to obtain a fluororesin powder having an average particle size of 40 µm or less. The melting point of the obtained fluororesin was 329°C.

### Preparation of fluororesin dispersion

EEA was used as the fluorinated emulsifier. Into a 100 L stainless steel autoclave equipped with a baffle plate and a stirrer, 36 g of EEA, 555 g of paraffin wax (melting point: 55°C) and 61.3 liter of deionized water were charged. The interior of the autoclave was replaced with nitrogen and depressurized, and the TFE monomer was introduced and heated to 62°C with stirring. The TFE monomer was further injected until the internal pressure reached 1.765 MPa, and 26.3 g of disuccinic peroxide (concentration: 80 mass%, the rest being water) dissolved in 1 liter of warm water of about 70°C was injected.

About 3 minutes later, the autoclave internal pressure started dropping to 1.716 MPa, and the TFE monomer was injected to keep an internal pressure of 1.765 MPa to let polymerization proceed. During the polymerization, EEA dissolved in warm water was injected in a total amount of 53 g as EEA in two separate doses. The temperature of the autoclave was gradually increased to 72°C, and when the amount of the TFE monomer injected reached 22 kg, the reaction was completed and TFE in the autoclave was released to atmosphere. The polymerization time was 105 minutes. After cooling, paraffin wax solidified at the upper part was removed to obtain a PTFE dispersion. The PTFE concentration in the PTFE dispersion was about 25.0 mass%, and the EEA concentration was 0.40 mass% to the mass of PTFE. The average particle size of PTFE particles in the PTFE dispersion was 0.26 µm. The average molecular weight of PTFE was 760000, and the standard specific gravity of PTFE was 2.21.

### Preparation of fluororesin composition

Into a 8 L stainless steel tank equipped with a baffle plate and a stirrer, 994 g of the above fluororesin dispersion was put and stirred. To the fluororesin dispersion with stirring, a mixture of 250 g of the above fluororesin powder and 906 g of the isopropanol was added. The amount of the fluororesin powder was 21.6 mass% to the total mass of the mixture. The mass ratio of PTFE in the fluororesin dispersion to PTFE in the fluororesin powder was 1:1, and the mass ratio of IPA mixed with the fluororesin powder to water in the fluororesin dispersion was 6:5. The total amount of the fluororesin in the fluororesin composition was 23.3 mass%.

The mixture was stirred by the stirrer at 680 rpm for 10 minutes to agglomerate solid contents in the fluororesin composition. Then, flocs were separated from the solvent by filtration through a sieving. The flocs were put in a tray and vacuum dried at 25°C for 8 hours or more and dried at 200°C for 10 hours to obtain a powder, which is a mixture of the fluororesin in the fluororesin dispersion and the fluororesin powder with a history of being heated to the melting point or higher.

345 g of the obtained powder mixture was put into a mold with a diameter of 7.3 mm and pressurized under 320 kg/cm² to obtain a preliminarily molded body. The preliminarily molded body was fired at 380°C for 2 hours to obtain molded body in Example 1.

### <Example 2>

The fluororesin composition prepared in Example 1 was stirred by the stirrer at 680 rpm for 10 minutes to agglomerate solid contents in the fluororesin composition, and flocs were separated from the solvent by filtration. The flocs collected by filtration were washed with a large quantity of water, put in a tray, and vacuum dried at 25°C for 2 hours or more and dried at 200°C for 10 hours or more to obtain a powder, which is a mixture of the fluororesin in the fluororesin dispersion and the fluororesin powder with a history of being heated to the melting point or higher. Subsequent preliminary molding and firing were conducted in the same manner as in Example 1 to obtain molded body in Example 2.

<Comparative Example 1>

### Preparation of fluororesin dispersion

The fluororesin dispersion prepared in Example 1 was stabilized with a nonionic surfactant (a), a nonionic surfactant (b) and a nonionic surfactant (c) and made to pass through a column packed with a strongly basic anion exchange resin (A300 (registered trademark) manufactured by Purolite), and the filtrate was stabilized with an anionic surfactant (d) and an anionic surfactant (e). The obtained liquid mixture was concentrated by known electroconcentration method and adjusted to have a pH 9 to 11 with an additive (f), an additive (g) and aqueous ammonia. The obtained liquid mixture had a fluororesin concentration (PTFE resin concentration) of 62 mass% and contained the above surfactants and additives in mass% to the mass of PTFE as identified in Table 1.

**Table 1**

| Table 1 | Product name | Chemical formula | Mass% (to mass of PTFE) |
|---|---|---|---|
| (a) | Newcol 1308 (registered trademark) manufactured by NIPPON NYUKAZAI CO., LTD. | C₁₃H₂₇-O-(C₂H₄O)_{8.2}-(C₃H₆O)H | 2.2 |
| (b) | Newcol G1301-H (registered trademark) manufactured by NIPPON NYUKAZAI CO., LTD. | C₁₃H₂₇-O-(C₄H₈O)₁₂-(C₂H₄O)₈H | 1.3 |
| (c) | FAA09601 (registered trademark) manufactured by NIPPON NYUKAZAI CO., LTD. | C₁₃H₂₇-O-(C₄H₈O)_{1.2}-(C₂H₄O)₁₂H | 1.3 |
| (d) | EMAL TD (registered trademark) manufactured by Kao Chemicals | C₁₂H₂₆O₄S·C₆H₁₅NO₃ | 0.01 |
| (e) | LUNAC L-50 (registered trademark) manufactured by Kao Chemicals | C₁₉H₂₁NO₅ | 0.02 |
| (f) | PEO-2 (registered trademark) manufactured by Sumitomo Seika Chemicals Company, Limited. | HO-(C₂H₄O)ₙ-H | 0.1 |
| (g) | PG (registered trademark) manufactured by AGC Inc. | C₃H₈O₂ | 0.4 |

Into a 8 L stainless steel tank equipped with a baffle plate and a stirrer, 779 g of the above fluororesin dispersion and 237 g of water were put and stirred. To the fluororesin dispersion with stirring, a mixture of 484 g of the fluororesin powder prepared in Example 1 and 650 g of isopropanol was added. The amount of the fluororesin powder was 42.7 mass% to the total mass of the mixture. The mass ratio of PTFE in the fluororesin dispersion to PTFE in the fluororesin powder was 1:1, and the mass ratio of IPA mixed with the fluororesin powder to water in the fluororesin dispersion was 6:5. The total amount of the fluororesin in the fluororesin composition was 45.0 mass%. Subsequent steps for preparing a fluororesin molded body including agglomeration, filtration, drying, preliminary molding and firing were conducted in the same manner as in Example 1 to obtain a molded body in Comparative Example 1.

### <Comparative Example 2>

The fluororesin composition prepared in Comparative Example 1 was stirred by a stirrer at 680 rpm for 10 minutes to agglomerate solid contents in the fluororesin composition, and flocs were separated from the solvent by filtration. The flocs collected by filtration were washed with a large quantity of water, put in a tray, vacuum dried at 25°C for 2 hours or more and dried at 200°C for 10 hours or more to obtain a powder, which is a mixture of the fluororesin in the fluororesin dispersion and the fluororesin powder with a history of being heated to the melting point or higher. Subsequent preliminary molding and firing were conducted in the same manner as in Example 1 to obtain a molded body in Comparative Example 2.

### <Comparative Example 3>

Into a 8 L stainless steel tank equipped with a baffle plate and a stirrer, 813 g of the fluororesin dispersion prepared in Example 1 and 987 g of water were put and stirred. To the fluororesin dispersion with stirring, 200 g of the fluororesin powder prepared in Example 1 was added. The total mass of PTFE and the solvent was 2000 g, and the mass ratio of PTFE in the fluororesin dispersion to PTFE in the fluororesin powder was 1:1. The total amount of the fluororesin in the fluororesin composition was 20.2 mass%. Subsequent steps for preparing a fluororesin molded body including agglomeration, filtration, during preliminary molding and firing were conducted in the same manner as in Example 1 to obtain a molded body in Comparative Example 3.

### <Reference Example 1>

A powder material (melting point: 341°C, bulk density: 0.9 g/mL, average particle size: 350 µm) composed of a non-fired PTFE homopolymer obtained by suspension polymerization was preliminarily molded and fired in the same manner as in Example 1 to obtain a molded body in Reference Example 1.

### <Evaluation>

Residues of the nonionic surfactant and isopropanol in the dried powder mixture before preliminary molding obtained in each Example, and the whiteness, the tensile strength and the tensile elongation of the molded body are shown in Table 2.

**Table 2**

| Table 2 | | Example 1 | Example 2 | Comparative Example 1 | Comparative Example 2 | Comparative Example 3 | Reference Example 1 |
|---|---|---|---|---|---|---|---|
| Addition of nonionic surfactant to fluororesin dispersion | | Not added | Not added | Added | Added | Not added | - |
| Washing of flocs of fluororesin composition with water | | Not washed | Washed | Not washed | Washed | Not washed | - |
| Residue of isopropanol | | ++ | + | ++ | + | - | - |
| Residue of nonionic surfactant | | + | + | +++ | ++ | - | - |
| Whiteness | | ○ | ○ | × | Δ | O (with voids, non-uniform) | ○ |
| Tensile strength | MD | 19.6 | 21.7 | 15.1 | 18.2 | 12.3 | 28.4 |
| | TD | 17.3 | 18.3 | 14.7 | 17.3 | 11.2 | 24.7 |
| Tensile elongation | MD | 271.9 | 317.7 | 173.4 | 252.5 | 158.3 | 254.6 |
| | TD | 198.7 | 221.1 | 137.6 | 204.9 | 48.5 | 232.9 |

As shown in Table 2, the molded bodies in Examples 1 and 2 were superior in the whiteness, the tensile strength and the tensile elongation to molded bodies in Comparative Examples 1, 2 and 3, and were comparable in the properties to the molded body in Reference Example 1.

Further, by comparison between Examples 1 and 2, and Comparative Examples 1 and 2, by washing the flocs of the fluororesin composition with water, the residues of isopropanol and the nonionic surfactant reduced, and all the properties of the whiteness, the tensile strength and the tensile elongation improved.

Further, by comparison between Example 1 and Comparative Example 3, the tensile strength and the tensile elongation improved when the fluororesin powder with a heat history was mixed with the water-soluble organic solvent as in Example 1.

According to the present invention, it is possible to produce a molded body having the whiteness, the tensile strength and the tensile elongation comparable to those of a molded body produced by using a fluororesin molding powder without a heat history, even by using a fluororesin powder obtained by recycling and crushing a fluororesin molded body with a heat history, and application of the present invention to various fields can be expected.

The entire disclosure of Japanese Patent Application No. 2022-211453 filed on December 28, 2022 including specification, claims and summary is incorporated herein by reference in its entirety.

## Claims

1. A method for producing a fluororesin composition, which comprises mixing a mixture of a fluororesin powder with a heat history of being heated to the melting point or higher and a water-soluble organic solvent, with a fluororesin dispersion produced by emulsion polymerization, containing no nonionic surfactant.

2. The method for producing a fluororesin composition according to Claim 1, wherein in the mixture of the fluororesin powder with a heat history of being heated to the melting point or higher and the water-soluble organic solvent, the content of the fluororesin powder is 50 mass% or less to the total mass of the mixture.

3. The method for producing a fluororesin composition according to Claim 1 or 2, wherein the fluororesin of the fluororesin powder with a heat history of being heated to the melting point or higher, and the fluororesin in the fluororesin dispersion, are each independently at least one copolymer selected from the group consisting of polytetrafluoroethylene, an ethylene/tetrafluoroethylene copolymer, a tetrafluoroethylene/hexafluoropropylene copolymer, a tetrafluoroethylene/perfluoro(alkyl vinyl ether) copolymer, a tetrafluoroethylene/chlorotrifluoroethylene copolymer, an ethylene/tetrafluoroethylene/hexafluoropropylene copolymer, and a tetrafluoroethylene/hexafluoropropylene/vinylidene fluoride copolymer.

4. The method for producing a fluororesin composition according to Claim 1 or 2, wherein the fluororesin of the fluororesin powder with a heat history of being heated to the melting point or higher, and the fluororesin in the fluororesin dispersion, are polytetrafluoroethylene.

5. The method for producing a fluororesin composition according to Claim 1 or 2, wherein the water-soluble organic solvent is at least one member selected from the group consisting of an aprotic water-soluble organic solvent, an alcohol and an aminoalcohol.

6. The method for producing a fluororesin composition according to Claim 1 or 2, wherein the water-soluble organic solvent is at least one member selected from the group consisting of methyl alcohol, ethyl alcohol, propyl alcohol, isopropyl alcohol, 1-methoxy-2-propanol, acetone, tetrahydrofuran, and acetonitrile.

7. The method for producing a fluororesin composition according to Claim 1 or 2, wherein the water-soluble organic solvent is isopropyl alcohol.

8. The method for producing a fluororesin composition according to Claim 1 or 2, wherein in the fluororesin composition, the content of the fluororesin is 10 mass% or more and 50 mass% or less to the total mass of the composition.

9. A method for producing a fluororesin molded body, which comprises mixing a mixture of a fluororesin powder with a heat history of being heated to the melting point or higher and a water-soluble organic solvent, with a fluororesin dispersion produced by emulsion polymerization, containing no nonionic surfactant, to obtain a composition, preliminarily molding the composition, and firing the preliminarily molded composition.

10. The method for producing a fluororesin molded body according to Claim 9, wherein in the mixture of the fluororesin powder with a heat history of being heated to the melting point or higher and the water-soluble organic solvent, the content of the fluororesin powder is 50 mass% or less to the total mass of the mixture.

11. The method for producing a fluororesin molded body according to Claim 9 or 10, wherein the composition is washed before preliminarily molded.

12. The method for producing a fluororesin molded body according to Claim 9 or 10, wherein the fluororesin of the fluororesin powder with a heat history of being heated to the melting point or higher, and the fluororesin in the fluororesin dispersion, are each independently at least one copolymer selected from the group consisting of polytetrafluoroethylene, an ethylene/tetrafluoroethylene copolymer, a tetrafluoroethylene/hexafluoropropylene copolymer, a tetrafluoroethylene/perfluoro(alkyl vinyl ether) copolymer, a tetrafluoroethylene/chlorotrifluoroethylene copolymer, an ethylene/tetrafluoroethylene/hexafluoropropylene copolymer, and a tetrafluoroethylene/hexafluoropropylene/vinylidene fluoride copolymer.

13. The method for producing a fluororesin molded body according to Claim 9 or 10, wherein the fluororesin of the fluororesin powder with a heat history of being heated to the melting point or higher, and the fluororesin in the fluororesin dispersion, are polytetrafluoroethylene.

14. The method for producing a fluororesin molded body according to Claim 9 or 10, wherein the water-soluble organic solvent is at least one member selected from the group consisting of an aprotic water-soluble organic solvent, an alcohol and an aminoalcohol.

15. The method for producing a fluororesin molded body according to Claim 9 or 10, wherein the water-soluble organic solvent is at least one member selected from the group consisting of methyl alcohol, ethyl alcohol, propyl alcohol, isopropyl alcohol, 1-methoxy-2-propanol, acetone, tetrahydrofuran, and acetonitrile.

16. The method for producing a fluororesin molded body according to Claim 9 or 10, wherein the water-soluble organic solvent is isopropyl alcohol.

17. The method for producing a fluororesin molded body according to Claim 9 or 10, wherein in the fluororesin composition, the content of the fluororesin is 10 mass% or more and 50 mass% or less to the total mass of the composition.

18. A fluororesin composition, which is obtained by the production method as defined in Claim 1 or 2.

19. A fluororesin composition containing a fluororesin having a melting point of 335°C or lower, and a fluororesin dispersion produced by emulsion polymerization, wherein
the fluororesin having a melting point of 335°C or lower is mixed at a concentration of 50 mass% or less with a water-soluble organic solvent, and
the fluororesin dispersion contains no nonionic surfactant.
